# EUROPEAN PATENT APPLICATION

(11) **EP 4 265 527 A1**
(43) Date of publication of application: **25.10.2023**
(21) Application number: 22210356.6
(22) Date of filing: 20.04.2022
(51) Int. Cl.: B64D 37/32

(54) **FIRE, EXPLOSION AND LIQUIFACTION PROTECTION SYSTEM**

(62) Divisional of application: 22169010.0
(71) Applicant: Zero Emissions Aerospace Limited, Bristol BS6 5EZ (GB)
(72) Inventor: ORCHARD, Matthew Noel, Bristol (GB)
(74) Representative: Butler, Daniel James

(57) **Abstract**

The invention is creation of a protected space in the interior of a vehicle surrounding elements of the vehicle's fuel system that stops subsequent unsafe leakage of fuel and flammable gas into other interior spaces of the vehicle. It limits both the potential for the build-up of flammable gas in the interior of the vehicle and the potential of detonation. The invention if used to protect a cryogenic fuel system also protects against liquefaction occurring. In the event that the protected fuel system has a failure the invention will by design cause forced ventilation to occur to safely vent the protected space and protect the vehicle from the failure.

## Description

### TECHNICAL FIELD

This invention relates to a safety system that contains and reduces the risks from fire and explosion from the fuel systems of aircraft and similar vehicles. In the case of use with cryogenic fuels the system can also be used to eliminate the risk of dangerous liquification of gases from the air forming on and inside the vehicle.

### BACKGROUND

As new environmentally friendly ways to power vehicles like aircraft are being developed, such as the use of hydrogen as a low pollution fuel, existing safety threats can have changed parameters to manage, and new safety threats are exposed. This requires new ways to be found to maintain and improve vehicle safety, particularly with regards to fire and explosion. Where cryogenic fuels are used, then the new threat of liquification of gases from the air onto surfaces of the vehicle may also need to be protected against.

One such safety threat is the potential for fuel to escape into the various interior volumes that occur in a vehicle, either as a liquid that can subsequently evaporate, or as a directly escaping gas. If the fuel escape continues it may in the first instance increase the concentration of a flammable gas in the interior volume to the point the mixture with air becomes flammable. If the leaking fuel reaches an even further increased concentration level it can in the second instance reach an explosive level. If an ignition source is introduced to this volume, or the mixture becomes heated to an auto-ignition temperature, then the mixture in the first instance will catch fire, or in the second instance will cause a detonation, both events which can lead to damage or even the destruction of the vehicle. For these reasons aviation authorities like the Federal Aviation Authority in the United States and the European Union Aviation Safety Agency have specific rules which aircraft designs must comply with to avoid such scenarios. This includes the requirement that a single failure of a fuel system on an aircraft should not create such a sequence of events that would imperil the aircraft from fire or explosion. It also requires that interior spaces of the aircraft adjacent to a primary fuel system must also be protected from negative effects of the fuel in the case of leakage or other accidental fuel release.

One possible solution to protect against fire and explosion, which has been commonly used in the aviation industry, is to change the mixture of gases surrounding a liquid fuel to make them inflammable and non-explosive, by introducing an inert gas into the concerned interior volumes or zones. This process is usually known as inerting. Such inerting can be effective for liquid fuels, but if the fuel system of the vehicle uses fuel in a gaseous form rather than liquid, it is not a viable solution to internally protect the fuel system (the primary fuel space) as it alters the fuel mixture compromising its usefulness for combustion or electrical energy generation. If the vehicle interior volume or zone to be protected is a secondary space adjacent but not directly connected to the fuel system, inerting remains a possible solution. However, if the vehicle uses a high-pressure gas as a fuel then such a solution for the secondary spaces becomes increasingly difficult and less viable as the inerting gas to remain effective should be maintained at a higher pressure than both the operating pressures and failure pressures of the gaseous fuel in the fuel system. If the designer progresses with an inerting protection system for such an application this can result in the need for complex, costly and heavy pressure vessels to contain elements of the fuel system and the inerting system to maintain the necessary safety. Active inerting systems, where the inerting gas is generated on an as needed basis, also have the disadvantage that they need to be functional to create an ongoing level of protection, and if there is a failure of the inerting system this can require rectification before the vehicle is considered safe for subsequent use compromising the operational reliability of the vehicle. If the vehicle's fuel pressures are high enough that they require the use of some form of pressure containment vessel or pressurised zone, then this also adds to the burden of maintenance activities when anything inside the pressure containment zone has to be accessed as the pressure seal and pressurised inerting will need to be restored before subsequent vehicle operation.

For vehicles using new cryogenic fuels there is the added risk that cooling due to the heat sink of the cryogenic fuel may cause any surface of the fuel system or the vehicle exposed to air to fall below -183°C, which is the level at which oxygen can condensate from the air onto the surface. This oxygen condensate can then concentrate to create a flammable or even explosive mixture. For this reason, additional care in the design of vehicle cryogenic fuel systems is needed to avoid any external surface being cooled below this temperature threshold.

### SUMMARY OF THE INVENTION

In general terms, the invention provides a protected space in a vehicle in which a closed volume containing one or more fuel systems components is substantially filled to prevent the potential leakage build up and/or is opened to an external environment in response to an over-pressure within the closed volume.

In a first aspect, the invention provides a protected space in a vehicle, the protected space including: an enclosure defining a closed volume housing one or more fuel system components; and a fused opening in fluid communication with the closed volume and an external atmosphere, the fused opening having a closed configuration in which the closed volume is sealed and an open configuration in which the closed volume is open to the external atmosphere, the fused opening being reconfigurable from the closed configuration to the open configuration in response to a pressure in the closed volume equalling or exceeding a threshold pressure.

The vehicle preferably includes a fuel system comprising a fuel tank and the one or more fuel system components, the one or more fuel system components being located outside of the fuel tank.

In a second aspect, the present invention provides a protected space in a vehicle comprising a fuel system including a fuel tank and one or more fuel system components outside of the fuel tank, the protected space including: an enclosure defining a sealed closed volume housing the one or more fuel system components; and one or more inflammable filler elements filling a substantial part of the closed volume, and optionally enclosing the one or more fuel systems components.

The invention can therefore be considered to be the creation of a protected space on or in a vehicle, consisting of any secondary volume surrounding the fuel system thereof. The protected space creates the conditions for the prevention of the possible failure cases of fire, explosion and liquefaction within using the principles of (a) sealing a volume to protect leakage escaping from it, (b) restricting the interior space by filling or occupying the volume that a potentially dangerous fluid mix could be created in to limit its explosive potential, and/or (c) creating the ventilation of the space after a failure to avoid or minimise the effect of the failure event.

Where a fuel system has complex elements and equipment, such as valves and pumps, these will make the interior volume geometrically difficult to protect with state-of-the-art means, and it is probable that easy access for maintenance is also necessary. It is also probable with such equipment that hard connections are not feasible, and this equipment will likely have rotating elements, seals and other connections that may increase the likelihood of fuel permeation in the interior space they occupy. For vehicle interior spaces containing these elements the invention uses a combination of elements to create a protected space that protects the rest of the vehicle in case of a failure of any of the enclosed primary fuel system elements, causing leakage or escape.

The first layer of protection for the protected space is an enclosure, defined by one or more enclosing elements, that is substantially sealed from the rest of the interior of the vehicle, so that in the event of leakage in the closed volume defined by the enclosure the leakage will be substantially prevented from propagating to adjacent interior volumes. This sealing could be achieved by making the enclosure or enclosing element(s) from a single part made of substantially impermeable material and creating cut outs for any penetrations, or by assembling the enclosure or enclosed element(s) from two or more parts and introducing appropriate seals or sealant in any joints. This sealed protected space will in most embodiments have at least one access panel through which the internal volume of the protected space can be accessed to perform any maintenance activities on the contained fuel system elements. This access panel will have suitable seals and locking features on it, so that when the access panel is replaced the protected space will remain substantially sealed.

In preferred embodiments a further level of protection is given to the protected space by configuring the one or more fused openings (e.g. fused panels) that connect the interior of the protected space with the exterior of the vehicle such that if the pressure internal to the protected space exceeds a safe level that the fused opening(s) either rupture or break away at one or more interfaces to create a connection to the external airflow around the vehicle. This allows the release of the internal pressure and any dangerous mixture from the protected space out to the exterior of the vehicle. This designed safety failure can also readily be identified in a standard walk-around inspection before next operation of the vehicle so that the underlying initial failure can be trouble shot and corrected. It will also be possible in some embodiments of the fused opening(s) to include an electronic sensor that records the failure and electronically indicates this safety indication to the operator of the vehicle.

Thus, the second aspect of the invention preferably comprises a fused opening in fluid communication with the closed volume and an external atmosphere, the fused opening having a closed configuration in which the closed volume is sealed and an open configuration in which the closed volume is open to the external atmosphere, the fused opening being reconfigurable from the closed configuration to the open configuration in response to a pressure in the closed volume equalling or exceeding a threshold pressure.

The enclosure may thus be adjacent to a primary fuel system, and may enclose fuel systems components servicing that primary fuel system. The fuel systems components may comprise, for example, valves, pumps or other fuel systems equipment. The enclosure will typically be adjacent a fuel tank, but not within or forming part of a fuel tank.

The external atmosphere may be an atmosphere external to the vehicle, or alternatively an atmosphere within the vehicle.

The one or more fuel systems components may have the potential for having a leak path via which liquid or gaseous fuel may leak into the closed volume of the protected space.

The protected space is preferably for protecting the vehicle from fire, detonation and/or liquefaction, for example fire, detonation and/or liquefaction caused by fuel leaked from the one or more fuel systems components.

The fused opening may comprise any appropriate device enabling it to be reconfigurable from the closed to the open configuration in response to a pressure in the closed volume equal to or exceeding the threshold pressure. For example, the fused opening may be designed to rupture or detach if the interior of the protected space exceeds a targeted failure pressure, thereby releasing any over-pressure inside the space and creating a venting channel whereby the interior of the Protected Space can be vented. The fused opening preferably comprises a fused panel configured to become at least partially detached from the enclosure in the open configuration.

The protected space may include one or more electrical driving actuators for the one or more fuel system components, the one or more electrical driving actuators being mounted outside the closed volume. In this way, the electrical drives are electrically isolated from the closed volume such that they cannot provide an ignition source. An electrically isolated connecting drive may electrically connect each electrical driving actuator with a respective fuel systems component.

Whilst it is expected that the fuel systems components contained inside the closed volume in normal operation will not allow fuel to escape, in preferred embodiments to provide an additional level of protection any contained equipment that is electrically actuated will have the electric driving actuator mounted to the exterior of the protected space with an electrically isolated connecting drive that has a minimum of one electrically isolating element in it to prevent any ignition sources being present inside the sealed protected space. This electrically isolated connecting drive will also be sealed to substantially stop any gas or vapours in the protected space escaping. By this means if the integrity of the fuel system or its constituent element contained within the protected space fails, allowing fuel to escape, then as any connected electrical equipment will be mounted to the exterior this will create a second level of protection isolating the contamination of fuel inside the protected space from any ignition source.

Whilst sealing the protected space does provide a level of protection, it does not stop a failure of the equipment(s) or pipes enclosed creating a situation where the volume can become full of an explosive mix. If a subsequent secondary failure then occurs causing heating (such as an external ground fire) this could potentially create a catastrophic condition. Alternatively, if leakage into the protected space was not detected nor detectable creating a latent failure, then a subsequent electrical failure of attached equipment as it is adjacent could still be considered to create a safety condition for which additional protection should be imposed.

The invention thus uses a simple principle to reduce the risk from such a failure to acceptable levels by limiting the explosive potential, which can be done by reducing the available volume that any explosive mix can fill. This is achieved by first filling large spaces inside the protected space around the fuel system elements and equipment with lightweight inert spacers or filling that reduce the empty volume that an explosive gas could fill. These non-flammable spacers can be attached to the internal surfaces of the protected space, or to any detachable access panel(s). The residual volume that remains after the introduction of these non-flammable spacers can be further reduced by introducing inflammable microbeads or microcapsules, such as those made of glass, into remaining voids. Such microbeads or microcapsules can replace up to 74%-85% of any remaining volume thereby making the space available for flammable or explosive mixtures to fill in the protected space negligible. In alternative embodiments it may be acceptable to avoid the use of the non-flammable spacers and instead simply fill the entirety of the protected space not filled by the fuel system elements with microbeads or microcapsules. In addition to the function of filling space to eliminate the possibility of it being filled with flammable or explosive mixtures, the non-flammable spacers and microbeads or microcapsules also have the function of insulating the fuel system elements and equipment within the protected space from falling below the -183°C threshold for dangerous liquification.

Thus, the protected space preferably comprises one or more inflammable filler elements filling a substantial part of the closed volume, and optionally enclosing the one or more fuel systems components.

In preferred embodiments the one or more inflammable filler elements comprise one or more of: one or more spacer elements having a shape configured to substantially conform to a shape of at least a portion of the enclosure; and a plurality of microbeads or microcapsules.

In some embodiments the one or more fuel system components contains, or is configured to contain, a cryogenic fuel and the one or more inflammable filler elements are formed from a thermally insulating material. Thus, unwanted liquefaction can be avoided, as described above.

Similarly, the protected space preferably comprises one or more inflammable spacer elements filling a substantial part of the closed volume. Optionally, the one or more inflammable spacer elements may fill a majority of the closed volume.

Alternatively, or in addition, the protected space preferably comprises a plurality of inert microbeads or microcapsules filling a substantial part of the closed volume. Optionally, the inert microbeads or microcapsules may fill a majority of the closed volume.

In some embodiments where even further additional protection is desired the fused vent panel and the surrounding elements will have a design to create an enhanced forced ventilation of the protected space after a failure that causes the fused panel(s) to detach. This embodiment has the geometry of the surrounding structure when the fused panel fails designed in such a way that the failure causes the exposed structure surrounding the detached fused panel to act as a scoop into the airflow around the vehicle creating a forced ventilation into the interior of the protected space. This scoop causes even more frequent changing of the air in the protected space causing the ratio of the mixture to drop below the flammability ratio necessary to sustain fire. The significant benefit of the invention is that the drag penalty of this forced ventilation only occurs after a failure. Therefore, in normal operations there is no ongoing ventilation which causes a parasitic drag loss and degradation to the vehicle's fuel efficiency.

Thus, in some embodiments the fused opening comprises a lip configured to project into an air flow over the exterior surface when the fused opening is in the open configuration to thereby ventilate the closed volume. By projecting into the air flow, the lip causes at least a portion of the air flow to be diverted into the closed volume to thereby ventilate the protected space.

In related embodiments the fused opening comprises an interior air deflector or air control element configured to cooperate with the lip to increase ventilation of the enclosure in the open configuration. For example, the air deflector or air control element may comprise an air scoop having an inwardly curved profile. Such a profile will further encourage air flow into the closed volume.

The lip is preferably concealed by the fused panel in the closed configuration. For example, the lip may be formed in an external panel of the vehicle that has a raised profile matching a raised profile of the fused panel. Thus, when the fused panel is deployed the lip is exposed. Thus, the protected space may comprise an exterior panel defining the lip, wherein the exterior panel and the fused panel together define a continuous exterior surface of the vehicle in the closed configuration.

In some embodiments the fused panel is configured to provide an exterior surface of the vehicle in the closed configuration.

The enclosure may include a removable panel configured to provide access to the closed volume. Access may be required, for example, for maintenance of the fuel systems components.

The protected space may comprise one or more structural elements of the vehicle which form at least a portion of the enclosure. That is, structural elements of the vehicle may be utilised to form one or more walls of the enclosure. Such an arrangement may both minimise vehicle weight and also maximise a size of the protected space to thereby facilitate maintenance of the fuel systems components.

The one or more fuel system components may contain, or be configured to contain, a cryogenic fuel, and the enclosure may provide a sealed closed volume in the closed configuration. Thus, unwanted liquefaction can be avoided, as described above.

A third aspect of the invention provides a vehicle comprising a protected space according to the first or second aspects, optionally wherein the vehicle is an aircraft, further optionally wherein the vehicle comprises a fuel system including a fuel tank and the one or more fuel system components are located outside of the fuel tank.

A fourth aspect of the invention provides a method of protecting a vehicle from fire, detonation and/or liquefaction, including the steps of: providing a protected space according to the first or second aspects or a vehicle according to the third aspect, wherein in use a leak of fuel from the one or more fuel system components is initially contained within the closed volume of the enclosure.

Subsequently, if a pressure within the closed volume equals or exceeds the threshold pressure, then the fused opening is preferably automatically reconfigured from the closed configuration to the open configuration.

Other aspects of the invention are set out below.

The creation of a substantially sealed protected space for fuel system elements of a vehicle, that limits the build up of flammable gases and will ventilate if the pressure exceeds a predefined limit.

A protected space for fuel system elements of a vehicle that is substantially sealed from other interior spaces of the vehicle so as not to allow any leakage to propagate outside the volume.

A protected space for fuel system elements of a vehicle where any electrical drives for equipment inside the protected space are mounted outside the sealed volume and electrically isolated from the volume such that these electrical drives cannot cause ignition within the volume.

A protected space for fuel system elements of a vehicle that allows for periodic maintenance access with a panel or opening in the protected space that can be both removed and replaced and resealed.

The use of inflammable spacer elements inside any protected space in a vehicle, which is not the interior of a fuel storage tank, to reduce the possible volume of flammable or explosive mixture in a defined protected space in the vehicle.

The use of inert microbeads or microcapsules as a safe and inflammable filler to reduce the possible volume of flammable or explosive mixture that can enter a defined protected space in a vehicle, which is not the interior of a fuel storage tank.

A filling entry for a protected space or volume of a vehicle, that is not a fuel tank, designed to enable the pouring in or ingress of microbeads or microcapsules to fill the protected space. The associated lid or cap with means to seal the filling entry to create a substantially sealed closure of the filling entry.

The application of a fused panel or burst panel connecting a protected space or interior volume of a vehicle, where leaking fuel or fuel vapours may build-up, to the exterior of the vehicle. Said fused panel or burst panel designed such that pressure build-up beyond a predefined level created by fuel leakage occurring will break and/or release at the fuse thereby releasing any over-pressure along with releasing leaked fuel from the interior of the protected space.

A fuse panel or burst panel and its connected surrounding structure that when the fuse panel or burst panel is activated and released, will expose a lip projecting into the oncoming air flow around the vehicle and cause a forced ventilation flow of air into the interior volume of the protected space connected to the fuse panel or burst panel. Any internal features such as scoop or deflector elements that are connected to the exposed lip that increase the efficiency of the ventilation of the redirected air flow into the internal space after the fuse panel or burst panel is activated.

Any external aerodynamically shaped protuberance on a fuse panel or burst panel, and/or an adjacent fixed panel(s) that when the fuse panel or burst panel fails will create a scoop feature into the airflow around a vehicle to direct an air flow internally into a vehicle.

Throughout the description and claims of this specification, the words "comprise" and "contain" and variations of the words, for example "comprising" and "comprises", mean "including but not limited to", and do not exclude other components, integers or steps. Moreover, the singular encompasses the plural unless the context otherwise requires: in particular, where the indefinite article is used, the specification is to be understood as contemplating plurality as well as singularity, unless the context requires otherwise.

Preferred features of each aspect of the invention may be as described in connection with any of the other aspects. Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible.

### BRIEF DESCRIPTION OF THE DRAWINGS

One or more embodiments of the invention will now be described, by way of example only, with reference to the accompanying drawings, in which:
Figure 1 illustrates a representative fuel system installed in a vehicle structure that may be protected by the invention;
Figure 2 illustrates an exploded view showing the build-up of a protected space according to an embodiment of the invention;
Figure 3 illustrates an assembled view of a protected space according to an embodiment of the invention; and
Figure 4 illustrates an embodiment of the invention in which a fused panel and surrounding structure creates a forced ventilation of the interior of the protected space in the case of the fused panel being triggered.

### DETAILED DESCRIPTION

In most vehicle fuel systems, the fuel system consists of a number of different types of components or elements, and the installed fuel system passes through different distinct internal zones of the vehicle formed by the vehicle's structural elements. These different zones containing elements of the fuel system may each have different types of safety implications, or safety risk factors. These safety implications may be increased susceptibility to physical impacts, say from tyre debris release, proximity to a source of electrical charge that could spark a fire, or the thermal environment of the zone. The description herein of the invention should be read to allow for any single element of the protective system to be embodied in isolation, or in any combination of the elements.

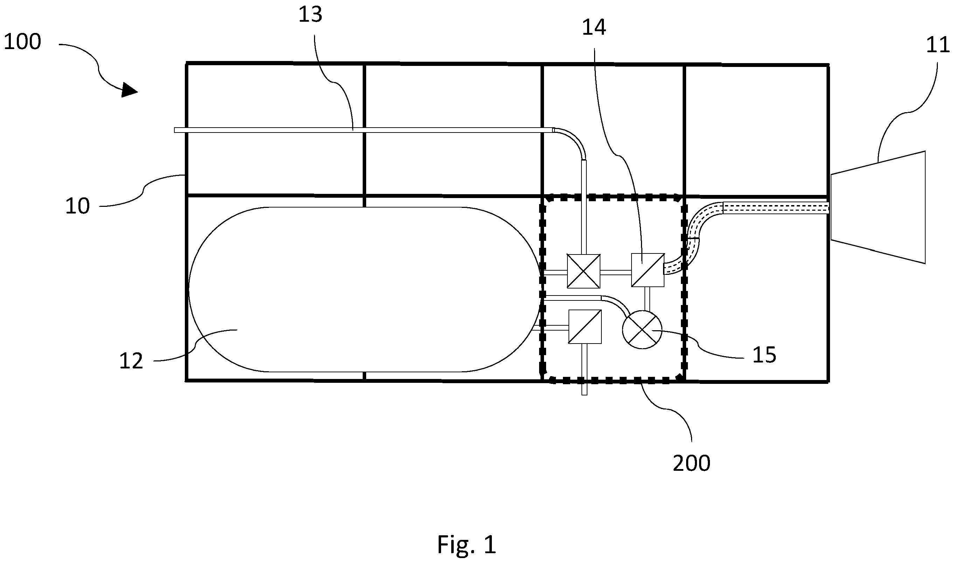

Figure 1 shows a representative fuel system installation 100, installed into a vehicle structure 10, which supplies the propulsion system 11 of the vehicle. This representative fuel system includes a fuel storage tank 12, pipes 13, valves 14, pumps 15 and other types of equipment (not shown) that have a direct connection to the fuel system. For example the invention could be used to provide protection for a fuel cell installation (not shown) on a vehicle rather than valves 14 and pumps 15.

Many of these system elements are typically not of simple geometry, making their protection difficult, and the invention very practical as a protection means. They may also often have rotating elements and seals rather than hard connections, meaning permeation of fuel and leakage is more likely. In preferred embodiments the protected space re-uses or is enclosed by structural elements of the vehicle that already exist for other purposes as is indicated in Figure 1, however it is also possible that the designer finds it beneficial to make a completely separate or partially separate enclosure to create the protected space.

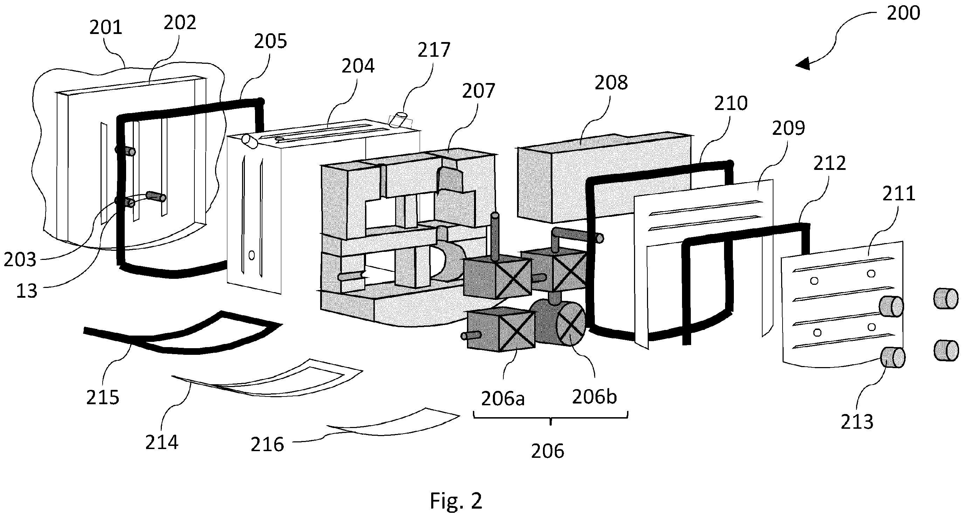

Figure 2 shows a build-up view (or exploded view) of a protected space 200 and the associated protections for fire, explosion and liquefaction that can be included. The enclosure of the protected space 200 in the illustrated embodiments is formed from part of the interior structure 201 of the vehicle and from an enclosing element 204, a closing element 209, sealed maintenance panel 211 and external surface 214. The enclosure thus defines a closed volume within the protected space 200.

The vehicle structure 201 in some embodiments will have distinct structural mounting features 202 to connect the enclosing element 204 to the vehicle structure 201 and seal it. The structural mounting features 202 may include outwardly-projecting flanges as illustrated, to provide one or more lapped joints with the enclosing element 204. The vehicle structure 201 may also have penetrations 203 to allow sealed connections to pipes 13 that are connected with an adjacent interior zone. These penetrations 203 will have an appropriate seal or sealant element around the penetrating pipe 13 to substantially seal the protected space 200.

In preferred embodiments the enclosing element 204 for the protected space 200 will be made of one or more pieces and will be connected to the vehicle structure 201 with a suitable sealing element 205 sandwiched between the mating surfaces of the structural mounting features 202 and the enclosing element 204 to ensure that any joints are substantially sealed. Inside the enclosing element 204 the installed fuel system elements 206 (fuel system components) that are being protected will be installed. Inside the enclosing element 204, and clear of the vehicle structure 201, one or more non-flammable spacer elements 207 will be installed around the installed fuel system elements 206 to reduce the volume available for a flammable or explosive mixture to fill in the case of leakage inside the protected space 200. The non-flammable spacer elements 207 in preferable embodiments may be made from inflammable material like silicon. The non-flammable spacer elements 207 may be installed by mechanical attachment, adhesive fastening, or other appropriate means. After the installation of the non-flammable spacer elements 207, installation of the fuel system elements 206 will be completed, and installation checks performed. Afterwards, in some embodiments of the invention one or more additional non-flammable spacer elements 208 may be added to further reduce the volume available for a flammable or explosive mixture in the case of leakage. Then in preferred embodiments the closing element 209 will be used to close the protected space 200, with a further suitable sealing element 210 between mating surfaces of the enclosing element 204 and closing element 209 to ensure any joints are substantially sealed. Embodiments where the closing element 209 and the enclosing element 204 are integrated together into a single part are possible, as is the possibility that these elements are formed by existing structural elements of the vehicle in place on the vehicle for another purpose, such as structural load carrying for an example.

It is also possible for a different sequence of installation to the above where the installation of the fuel system elements 206 occurs before the enclosing element 204 is assembled to the vehicle structure 201.

To ensure that the fuel system elements 206 can be accessed for maintenance operations a sealed maintenance panel 211 and an appropriate sealing element 212 will be incorporated into the design of the protected space 200 in preferred embodiments. In the illustrated embodiments the sealing element 212 provides a sealed joint between the maintenance panel 211 and the closing element 209.

Any electric actuation motors 213 of any contained equipment such as valves 206a or pumps 206b will be mounted on the external surfaces of the enclosure of the protected space 200 defined by the any combination of the vehicle structure 201, enclosing element 204, closing element 209 and maintenance panel 211. These actuation motors 213 will act through sealed drive elements and will be electrically isolated from the interior to make the protected space 200 separate and isolated from any ignition sources.

In preferred embodiments, to allow over-pressure due to a leakage to be addressed and vented from the vehicle, at least one external surface 214 of the protected space 200 will be connected to the exterior of the vehicle. This external surface 214 will have a suitable seal 215 to ensure that the whole of the protected space 200 will be substantially sealed in normal operations and without leakage. By substantially sealing the protected space 200 it will not be possible for a continuous entry flow of air to enter the interior of the protected space 200 and hence the possibility for the cryogenic fuel system elements 206 having liquification occurring on their surfaces is substantially restricted. To allow the release of over-pressure from the interior of the protected space 200 due to any leakage failure of the enclosed fuel system elements 206, the external surface 214 will have a cut out for one or more fused openings in the form of fused pressure panels 216 that are usually substantially sealed to the external surface 214, but designed to fail and separate when the pressure inside the protected zone 200 exceeds a pre-defined failure pressure. This separation of the fused panel 216 will thereby ensure the protected space 200 does not experience excessive over-pressure with the risk of structural failure and that any leaking fuel and vapours will ultimately be discharged from the vehicle safely. Further, the designed failure (i.e. deployment or activation) of the fused pressure panel(s) 216 will be easily detectable in a pre-flight inspection before any subsequent operation of the vehicle allowing corrective maintenance to repair any leaks or other failures to take place and to restore all levels of protection of the fuel system 100.

In some embodiments to further restrict the available space in the closed volume of the protected space 200 that a flammable or explosive mixture could build-up in, inert microbeads or microcapsules (such as glass microbeads) can be introduced into the unfilled interior of the protected space 200 to occupy a high proportion of the internal volume. These microbeads or microcapsules in preferred embodiments will introduced via a dedicated inlet 217, to allow the optimum filling of the protected space 200, and the dedicated inlet 217 can be completely closed by an appropriate lid or cap completing the sealing of the protected zone 200. By using a mixture of sizes of microbeads or microcapsules, any residual unfilled space in the protected space 200 can filled up by another 74%-84% based on mathematical analysis of the packing ratio of such spheres. The microbeads or microcapsules can be used in addition to the non-flammable spacer elements 207, or in some embodiments the microbeads or microcapsules may be used exclusively without the inclusion of the non-flammable spacer elements 207 in the protected space 200. When the microbeads or microcapsules are used in conjunction with the non-flammable spacer elements 207 the latter should have appropriate channels cut within the non-flammable spacer elements 207 to direct the filling of the microbeads or microcapsules and ensure the optimum and complete filling of the protected space 200.

For new vehicle propulsion systems using cryogenic fuels, there is not only the risk of the leaking fuel creating a fire and explosion risk, but if any surfaces exposed to air fall below -183°C the condensation of oxygen from the air can create an explosive mix even in the absence of a fuel leak. Therefore, in addition to the restriction in available space for flammable or explosive mixtures to build up, the microbeads or microcapsules and the non-flammable spacer elements 207 will also perform the function of creating an insulation layer around the fuel system elements 206 which will prevent and protect against the occurrence of liquefaction.

The dedicated inlet 217 to allow the effective introduction of the microbeads or microcapsules can be both used for the vehicle assembly or after maintenance to reintroduce the microbeads or microcapsules that have been removed to facilitate maintenance activity. In preferred embodiments the filling of the protected space 200 by microbeads or microcapsules during assembly or after maintenance will happen after all the assembly of the enclosing element 204, closing element 209, sealed maintenance panel 211, external surface 214 and fused pressure panel(s) 216 have been installed in place, along with all associated sealing.

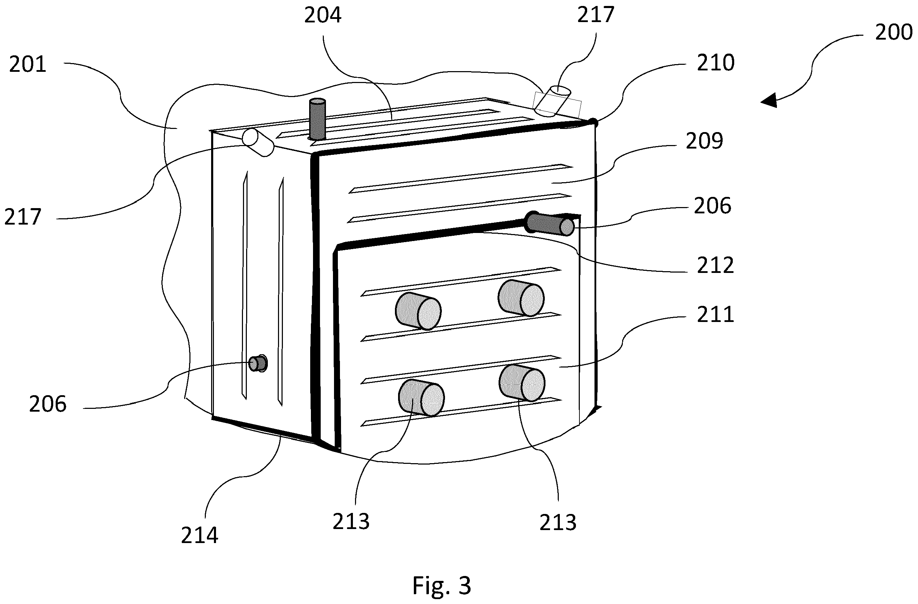

Figure 3 illustrates a preferred embodiment of the protected space 200 in its assembled state, with the interior elements obscured. In preferred embodiments the enclosing element 204, closing element 209, sealed maintenance panel 211 and external surface 214 should be structurally sized so, that in the worst case that the detonation of any leaked and explosive mixture in the unfilled volume of the protected zone 200 does occur, that these elements will sustain and contain the detonation force and only the fused pressure panel(s) 216 will fail, protecting the rest of the vehicle from damage. The detonation energy to be considered in such structural sizing can be significantly reduced by taking benefit of the installation of the non-flammable spacer elements 207, 208 and microbeads or microcapsules if these elements are included to fill the protected space 200.

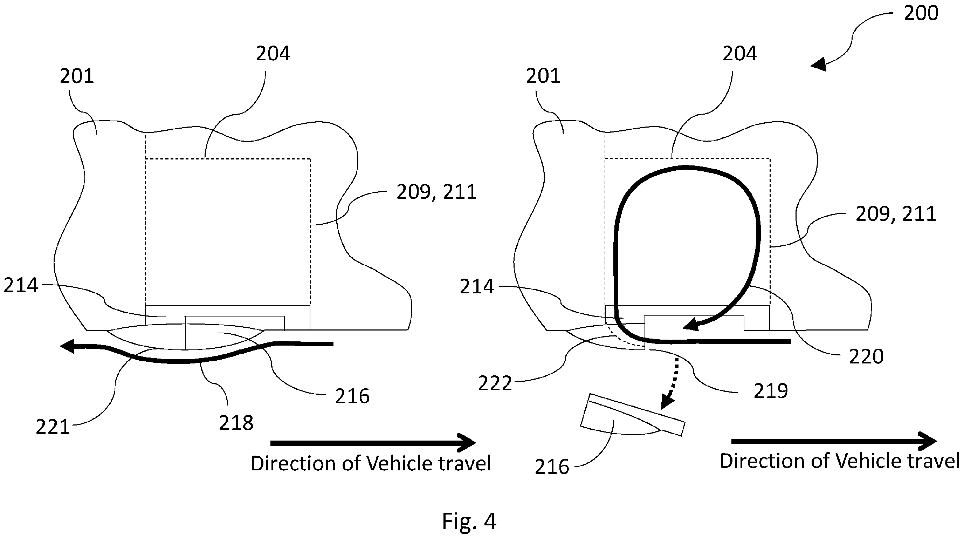

An additional element of protection from the invention for the protected space 200 is the forced ventilation element illustrated in Figure 4, which will only become active in the case that the fused pressure panel(s) 216 fails. In normal operation, where there is no failure of the fuel system elements 206 and consequently no failure of the fused panel(s) 216, the air flow 218 will travel around the aerodynamically smooth outer panel surfaces and have minimal disturbance to ensure the vehicle has minimal drag. However, if there is a failure of the fuel system elements 206 causing an over-pressure and consequentially the designed failure (i.e. deployment or activation) of the fused pressure panel(s) 216 then the geometrical design of the fused pressure panel(s) 216 and the surrounding fixed external surface 214 will be such that the detachment of the fused pressure panel(s) 216 will cause some part of the surrounding fixed external surface 214 to have an exposed lip 219 projecting into the air flow 220 created by the vehicle travelling through the air. This exposed lip 219 projecting into the air flow 220 will cause a forced ventilation into the protected space 200 due to the direction of the air flow 220. This exposed lip 219 may in preferred embodiments be created from a faired bump 221 that projects from the vehicle and remains faired with minimal drag in the normal operational condition where the fused pressure panel(s) 216 is fully attached. The internal air flow 220 and forced ventilation of the protected space may be enhanced by an internal scoop element 222 internally connected to the exposed lip 219. The forced ventilation caused by the direction of the air flow 220 is designed to be at a flow rate that at the normal operating speed of the vehicle that it would cause the combined air flow and typical fuel leakages mixture from the internal fuel system elements 206 to be below the flammability limits of the fuel used.

In some embodiments of the protective system, it may be accepted to have the protected space 200 without any non-flammable spacer elements 207, 208 and without any microbeads or microcapsules and instead rely solely on forced ventilation 220 after a failure of the fused panel(s) 216 using the system illustrated in Figure 4. Where all the elements of the invention are present in a single system, the failure of the fused pressure panel(s) 216 would be designed to allow some or all of the microbeads or microcapsules to be released from the protected space 200 and from the vehicle, opening up the interior of the protected space 200 for the forced air flow 220 to ventilate the interior volume. If non-flammable spacer elements 207, 208 are included in the embodiment of the protection system and forced air flow 220 to ventilate the interior is desired, then air channels will be made in the non-flammable spacer elements 207, 208 to permit sufficient directed flow of air within the protected space 200 to reduce the mixture ratio within the protected space 200 to be below flammability limits.

## Claims

1. A protected space in a vehicle comprising a fuel system including a fuel tank and one or more fuel system components outside of the fuel tank, the protected space being for protecting the vehicle from fire, detonation and/or liquefaction and including:
an enclosure defining a sealed closed volume housing the one or more fuel system components; and
one or more inflammable filler elements filling a substantial part of the closed volume.

2. A protected space of according to claim 1, wherein the one or more inflammable filler elements enclose the one or more fuel systems components.

3. A protected space according to claim 1 or 2, wherein the one or more inflammable filler elements comprises one or more spacer elements having a shape configured to substantially conform to a shape of at least a portion of the enclosure.

4. A protected space according to claim 3, wherein one or more spacer elements are attached to internal surfaces of the protected space.

5. A protected space according to any one of the preceding claims, wherein the one or more inflammable filler elements comprises a plurality of microbeads or microcapsules.

6. A protected space according to claim 3 or 4, wherein the residual volume that remains after the introduction of the one or more spacer elements comprises a plurality of microbeads or microcapsules.

7. A protected space according to claim 6, wherein the one or more spacer elements comprise channels to direct the filling of the microbeads or microcapsules.

8. A protected space according to claim 5, 6 or 7, wherein the plurality of microbeads or microcapsules comprise a mixture of sizes of microbeads or microcapsules.

9. A protected space according to any preceding claim, wherein the enclosure comprises a dedicated inlet for filling the protected space with one or more inflammable filler elements and a lid or cap for closing the inlet to complete the sealing of the protected zone.

10. A protected space according to any one of the preceding claims, wherein the one or more fuel system components contains, or is configured to contain, a cryogenic fuel and the one or more inflammable filler elements are formed from a thermally insulating material.

11. A protected space according to any one of the preceding claims, comprising a fused opening in fluid communication with the closed volume and an external atmosphere, the fused opening having a closed configuration in which the closed volume is sealed and an open configuration in which the closed volume is open to the external atmosphere, the fused opening being reconfigurable from the closed configuration to the open configuration in response to a pressure in the closed volume equalling or exceeding a threshold pressure.

12. A protected space according to any of the preceding claims, wherein the protected space comprises one or more structural elements of the vehicle which form at least a portion of the enclosure.

13. A protected space according to any of the preceding claims, wherein the enclosure includes a removable panel configured to provide access to the closed volume.

14. An aircraft comprising a protected space according to any of the preceding claims.

15. An aircraft as claimed in claim 13, wherein the enclosure is adjacent to a primary fuel system of the aircraft and encloses fuel systems components for servicing the primary fuel system.
